# EUROPEAN PATENT SPECIFICATION

(11) **EP 4 227 123 B1**
(45) Date of publication and mention of the grant of the patent: **25.06.2025**
(21) Application number: 22425004.3
(22) Date of filing: 10.02.2022
(51) Int. Cl.: B60J 1/00, B60J 1/10, B61D 25/00, B60J 10/70

(54) **WINDOW ASSEMBLY**
FENSTERBAUGRUPPE
ENSEMBLE FENÊTRE

(43) Date of publication of application: 16.08.2023
(73) Proprietor: Isoclima S.p.A., 35042 Este (Padova) (IT)
(72) Inventor: POLI, Elisabetta, 35043 Monselice (IT); SANDRIN, Cristian, 35042 Este (IT)
(74) Representative: Seitz, Ralf Hans Frank

(56) References cited:
- CN-A- 109 178 002
- US-A- 2 138 374
- US-A- 4 591 203
- US-A- 5 809 707

## Description

The present invention refers to a window assembly used, for instance, in a vehicle or building or, for instance, in a train or a car. More especially, the invention could be used, for instance, as a side window installed in a high-speed passenger-train.

Lateral cab and body side windows for high capacity means of transportation, for instance, buses, trains, and metro are designed for services in a wide range of environmental and operational conditions. Generally, such windows use a glazing, either a single pane laminated safety glass unit (LGU) or a double pane insulated glazing unit (IGU) connected to the main structural vehicle body by a metallic frame.

CN 109 178 002 A relates to a window mounting structure between a window frame and a window in the field of rail vehicles. The window mounting structure includes a window mounting member, the window frame, a vehicle body and a mounting recess there between. At least a portion of the window mounting member is arranged within the mounting recess. The window mounting member or form mount has a first locating recess for insertion of the window such that the window is mounted to the window frame. The window mounting member has a clamping recess and it includes a filler member in the clamping recess to allow the window mount to clamp the window on the vehicle body.

US 4,591,203 describes a vehicle body that has a window opening defined by a peripheral pinchweld flange including at spaced locations therealong, a plurality of circular openings or slots. The window opening is closed by a modular rear quarter window assembly of the type having a glass window panel 20 which has a molded frame 22 formed around its peripheral edge. A rigid push pin of metal fits snugly, but movably, within a corresponding passage of the molded frame.

US 2,138,374 describes a known window construction provided with two glass panes in a sash frame. US 5,809,707 mentions a glass window for a vehicle which has a plastic guard window being replaceable.

The metallic frame of the glazing is replaced increasingly by an extruded circumferential structural gasket that has structural properties in order to withstand defined static and dynamic loads caused by the operating conditions like, for instance, aerodynamic pressures, inertial forces due to acceleration or impacts/crashes, human loads and different combination of the mentioned actions in the spatial directions.

The structural gasket presents significant advantages towards traditional solutions based on metallic frames coupling glazing and body structure. The main advantages of the structured gasket made of polymeric material are, for instance, the elimination of heavy and expensive parts like the metallic frame itself.

The main problem of the structural gasket is related to the need of structural consistency of the gasket in transferring of comparable mechanical stress and loads from the glazing to the vehicle body structure and vice versa.

Accordingly, it is an object of the invention to provide a window assembly avoiding the above mentioned problem, particularly, avoiding heavy and stiff structural gaskets in case of increased operational loads on windows.

This object is solved by the window assembly of the invention as mentioned in claim 1. Accordingly, the window assembly or window of the invention used, for instance, in a vehicle or building or, for instance, in a train or a car, particularly a side window for a high-speed passenger-train or a metro-train, comprises a glazing with one or more panes made of glass, plastic, and/or ceramic material, a window opening provided in a body of, for instance, a vehicle or building, a frame like gasket provided between the glazing and the body and holding the glazing on the body within the window opening and at least one insert for reinforcing the gasket.

The remarkable advantage of the invention is that, by using the reinforcing insert or inserts, the usual gaskets could be used even in the case of higher operational loads and stresses on the window.

Further, since otherwise gaskets with increased stiffness would be required to withstand increased loads, the thicker and stiffer profiles of the gasket would not fit properly the curvature of the edge corners of the window. The heavy profiles of gasket could require often that these curved segments of the profiles have to be manufactured separately by injection and/or compression moulding processes resulting in a more complex and expansive gasket and window solution. Also these problems are avoided by the invention since the inserts enable to use small and sufficiently elastic profiles even in the case of higher operational loads.

Further remarkable advantages of the window assembly of the present invention due to the inserts are lower weight than with standard solution, easier assembly and maintenance of the system glazing/gasket on the vehicle's body, better fitting on the subcomponents with improvement of the water tightness of the system and less design constraint due to a lighter profile of the gasket that is more elastic and, therefore, can fit better the curvature of the glazing, improved overall mechanical strength and fatigue performances

The window assembly of the invention provides a gasket holding the glazing on the body by receiving an opening edge face, faces or edge of the body of the vehicle or building and an glazing edge face, faces or edge of the glazing whereby at least one insert extends in the gasket to ensure a strong reinforcement of the gasket and, thus, also a reinforced mounting of the glazing on the body.

The gasket of the invention has a gasket recess for accommodating and holding the glazing edge face or edge of the glazing to ensure the mounting of the glazing on the body together with the required water tightness of the window assembly.

The window assembly of the invention provides an even gasket bottom of the gasket, wherein a flanged head of each of the inserts extending between the glazing edge face of the glazing and the gasket bottom of the gasket to ensure the mounting of the insert(s) on the gasket.

The window assembly of the invention may have several inserts, pins or screws arranged along a perimeter or circumference of the gasket for improving the mechanical resistivity of the window assembly against increased mechanical loads effecting on the window assembly.

The inserts or structural elements of the invention can be inserted with constant or variable step along the whole perimeter or alternatively on a specific zone of the glazing and/or the body of a vehicle or building, in order to be able to adapt the window assembly to the mechanical load acting on the window, particularly in the case of an uneven distribution of the mechanical loads acting on the window.

The window assembly of the invention can comprise a circumferential body recess of the body of, for instance, a car or train, which is provided between parallel walls of the body, and an engaging portion of the gasket that extends between the walls within the body recess. The insert or the inserts then extend within the engaging portion of the gasket to provide an increased force for mounting the glazing on the body.

Preferably, in the invention, an equalising layer or tape that can be adhesive is arranged between the glazing edge face and the flanged head of the insert to avoid any movement of the insert(s), for instance, in case of vibrations.

The window assembly of the invention can have a lining layer, a lining tape or washer which is arranged between the flanged head of the insert(s) and the gasket bottom of the gasket recess to ensure a stable seat of the inserts on the gasket for reinforcing the gasket.

Preferably, the window assembly of the invention provides an insert extending in a corresponding bore or hole of the gasket which is provided between the gasket bottom of the gasket recess and the engaging portion of the gasket to ensure a stable seat of the insert in the gasket for reinforcing thereof.

The insert can have a tapered end portion extending in or fitting in a cavity or hollow space of the engaging portion of the gasket, whereby the cavity can be tapered correspondingly to the tapered end portion of the insert to provide a secured seat of the insert in the engaging portion of the gasket.

Preferably, the circumferential gasket of the window assembly of the invention comprises an inner wall portion or inner web, an outer wall portion or outer web, and a middle portion, wherein the inner wall portion extends from an inner surface of the inner pane of the glazing to an inner body surface of the body, the outer wall portion of the gasket extends from an outer surface of the outer pane of the glazing to an outer body surface of the body and wherein the middle portion extends between the gasket bottom of the gasket and the opening edge face of the body and between the outer and inner wall portions of the gasket. This gasket provides a secure watertight seat of the glazing on the body.

The window assembly of the invention can provide a bore or hole in the lining layer and a corresponding bore or hole in the middle portion from the gasket bottom of the gasket recess to the engaging portion of the gasket between the walls of the body, whereby the respective insert extends in the bore of the lining layer and in the corresponding bore of the middle portion of the gasket to ensure a secure seat of the insert in the gasket and, accordingly, a corresponding reinforcement of the gasket.

Further advantageous embodiments of the invention are mentioned in the dependent claims 2 to 13. Advantageous embodiments and advantages of the invention could also be derived from the following description of exemplified and preferred embodiments in connection with the drawings:
- Fig. 1: a schematic section part-view of a window assembly according to a preferred and exemplified embodiment of the invention and seen in the direction of arrow I. in Fig. 2; and
- Fig. 2: a schematic view of the window assembly of Fig. 1 seen from outside which is installed in the body of, for instance, a vehicle like a train.

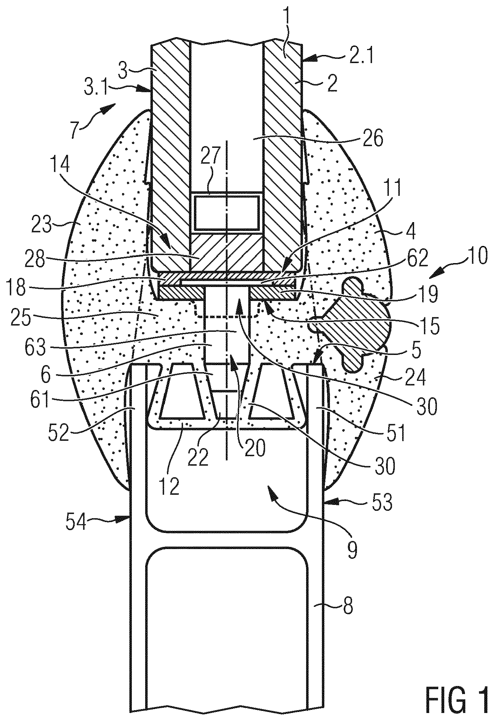

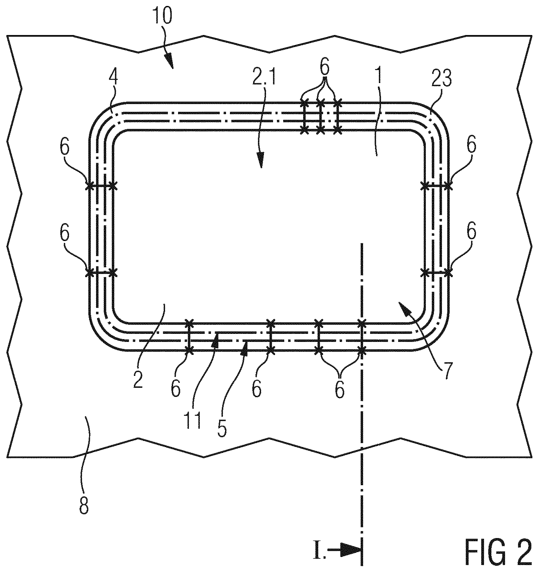

Fig. 1 shows a schematic section part-view of a window assembly 10 according to a preferred and exemplified embodiment of the invention wherein the window assembly 10 is shown in the assembled state with a glazing 1 mounted in a gasket 4 that extends on an opening edge face 5 or edge of a body 8, for instance, of a vehicle defining a window opening 7 as shown in Fig. 2. The window assembly 10 could be used, for instance, as a side window of a high-speed passenger train.

The glazing 1 of the window assembly 10 comprises two glass panes 2, 3 arranged parallel and a circumferential glazing edge face 11 or edge. The glazing 1 is arranged within the window opening 7 of the body 8. The glazing 1 of the window assembly 10 may be an insulating glazing comprising, for instance, two usually transparent glass panes, an outer glass pane 2 and an inner glass pane 3. Accordingly, the glazing 1 is a double pane insulated glazing unit (IGU) coupled to and mounted on the main structural body 8 by the gasket 4. The outer and inner glass panes 2 and 3 are separated by a dehydrated gas gap 26 enclosing, for instance, air or a special inert gas. The glass panes 2 and 3 can be made of monolithic tempered glass or laminated safety glass. A circumferential spacer 27 is arranged and glued in between the inner and outer glass panes 2 and 3. Further, a circumferential sealant 28 is arranged between the outer and inner glass panes 2 and 3. The sealant 28 is flush to the outer and inner glass panes 2 and 3 at the glazing edge face 11 of the glazing 1. The outer glass pane 2 or the glazing 1 has an outer surface 2.1 directed to an outside of the corresponding vehicle or building. The inner glass pane 3 or the glazing 1 has an inner surface 3.1 directed to an inside of the corresponding vehicle or building.

The opening edge face 5 of the body 8 is profiled and comprises a circumferential body recess 9 or holding fixture. The body recess 9 is defined by an outer wall 51 and an inner wall 52 extending in parallel wherein the outer wall 51 or the body 8 has an outer body surface 53 directed to an environment of the vehicle or building and the inner wall 52 of the body 8 has an inner body surface 54 directed to an inside of the vehicle or building. The walls 51 and 52 are flush to the opening edge face 5 of the body 8.

The window assembly 10 provides at least one insert 6 or several structural elements or inserts 6 in the form of preferably rotational symmetrical pins or screws for reinforcing the gasket 4, wherein the respective insert 6 extends substantially in the gasket 4. Each insert 6 comprises a flanged head 62, a cylindrical portion 63, and a tapered end portion 61 wherein the cylindrical portion 63 extends between the flanged head 62 and the tapered end portion 61. The cylindrical portion 63 of the insert 6 or screw can be threaded to withstand increased loading conditions. If the cylindrical portion 63 is threaded, the insert 6 can have a bushing fixed to a lining layer 19. The insert 6 or inserts are made of composite materials, polymeric or plastic materials and/or preferably metallic materials, for instance, aluminum or stainless steel.

Further, the window assembly 10 of Fig. 1 comprises a circumferential frame like structural gasket 4 provided between the glazing 1 and the opening edge face 5 or edge of the body 8. The gasket 4 couples the glazing 1 to the body 8 and it holds the glazing 1 within the window opening 7 on the body 8 by holding the opening edge face 5 or edge of the body 8 and the glazing edge face 11 or edge of the glazing 1.

The structural gasket 4 is a separate element made by extrusion or compression molding using polymeric material. The structural gasket 4 is duly fitted to the glazing 1 and to the body 8. The structural gasket 4 can be symmetrical or unsymmetrical in section.

The other function of the perimetral structural gasket 4 is to guarantee water tigtheness of the window assembly 10 in the operational conditions and last but not least it provides the usual mandatory requirement of fire/smoke opacity and toxicity compliance, for instance, according to EN 45545.

The circumferential frame like structural gasket 4 of the window assembly 10 comprises a circumferential gasket recess 14 for accommodating and holding the corresponding circumferential glazing edge face 11 or edge of the glazing 1 wherein the glazing edge face 11 extends within the gasket recess 14 of the gasket 4. The gasket recess 14 of the gasket 4 provides a circumferential gasket bottom 15 that is opposed to the glazing edge face 11 or faces of the glazing 1.

The gasket 4 is made of a polymeric extruded or compression moulded material and it comprises structural elastic properties in order to withstand defined static and dynamic loads on the window assembly 10 or window caused by the operating conditions like, for instance, aerodynamic uniformly distributed pressures up to 3kPa, inertial forces due to acceleration or impacts/crashes up to 5g, human loads and different combination of the mentioned actions in the spatial directions.

Further, the gasket 4 of the window assembly 10 according to the invention of Fig. 1 comprises a circumferential inner wall portion 23 or inner web, a circumferential outer wall portion 24 or outer web, and a middle portion 25. The inner wall portion 23 extends from an inner surface 3.1 of the inner pane 3 of the insulating glazing 1 to the inner body surface 54 of the body 8 and presses against these surfaces 3.1 and 54. The outer wall portion 24 of the gasket 4 extends from the outer surface 2.1 of the outer pane 2 of the insulating glazing 1 to the outer body surface 53 of the body 8 and it presses against these surfaces 2.1 and 53. The middle portion 25 extends between the gasket bottom 15 of the gasket recess 14 of the gasket 4 and the opening edge face 5 of the body 8 and between the inner and outer wall portions 23 and 24 of the gasket 4.

The gasket 4 comprises an engaging portion 12 that extends between the walls 51 and 52 of the body 8 within the body recess 9 of the body 8 wherein the engaging portion 12 presses against inside surfaces of the walls 51 and 52 of the body 8. The engaging portion 12 may comprise one or more tapered cavities 22, three tapered cavities 22 are shown in the embodiment of Fig. 1, surrounded by corresponding cavity walls 22.1.

Further, the gasket 4 has a number of bores 20 corresponding to the number of inserts 6 or pins. Each of the bores 20 is provided through the middle portion 25 of the gasket 4 between the gasket bottom 15 of the gasket recess 14 and the engaging potion 12 of the gasket 4. Accordingly, the inserts 6 or pins extend through the middle portion 25 of the gasket 4 within the bores 20. The inserts 6 extending within the engaging portion 12 of the gasket 4. The tapered end portion 21 of the respective insert 6 extends in a correspondingly tapered circumferential cavity 22 or hollow space in the middle of the engaging portion 12 of the gasket 4. The tapered end portion 21 or insert 6 may press against the cavity walls 22.1 of the cavity 22.

An equalising layer 18 or tape is arranged between the glazing edge face 11 of the glazing 1 and the flanged head 62 of each of the inserts 6 or pins. The equalising layer 18 equalises a thickness of the flanged head 62 of the corresponding insert 6. The equalising layer 18 may be adhesive. Further, a lining layer 19, lining tape or washer is arranged between the flanged head 62 of each of the inserts 6 or pins and the gasket bottom 15 of the gasket recess 14 of the gasket 4. The lining layer 19 may be polymeric and/or metallic. The lining layer 19 has through bores 30 or holes corresponding to the bores 20 of the middle portion 25 of the gasket 4. Each of the inserts 6 extending through the corresponding bores 20 and 30 into the engaging portion 12 of the gasket 4.

Fig. 2 shows a schematic and explaining view of the window assembly 10 of Fig. 1 seen from outside which is installed in the body 8 of, for instance, a vehicle like a train. A number of inserts 6 or structural elements can be inserted with constant distance or step between each two neighboured inserts 6 as explained and shown in Fig. 2 on left and right sides of a perimeter or circumference of the window assembly 10. Further, inserts 6 may be arranged with variable distance or step as explained and shown in Fig. 2 on a lower side of the window assembly 10. As shown and explained in Fig. 2, additional inserts 6 could be grouped, for instance, in a specific zone of the perimeter of the window assembly or glazing on an upper side of the window assembly 10.

## Claims

1. Window assembly (10) for a vehicle or building, particularly a side window for a high-speed passenger-train, comprising
a glazing (1) having one or more panes (2, 3) made of glass, plastic, and/or ceramic material, a window opening (7) provided in a body (8) of the vehicle or building,
a frame like gasket (4) provided between the glazing (1) and the body (8) and holding the glazing (1) on the body (8) within the window opening (7),
at least one insert (6) or pin for reinforcing the gasket (4), wherein the gasket (4) comprises a gasket recess (14) for accommodating and holding a glazing edge face (11) or edge of the glazing (1),
wherein the gasket recess (14) of the gasket (4) provides a circumferential gasket bottom (15), **characterized in that**
the at least one insert or pin comprises a flanged head (62) extending between the glazing edge face (11) or edge and the gasket bottom (15) of the gasket recess (14).

2. Window assembly (10) according to claim 1, **characterized in that**:
the body (8) comprises an opening edge face (5) defining the window opening (7) provided in the body (8);
the gasket (4) holds the glazing (1) on the body (8) by receiving the opening edge face (5) of the body (8) and the glazing edge face (11) or edge of the glazing (1); and
the at least one insert (6) extends in the gasket (4).

3. Window assembly (10) according to claim 1, **characterized by** several inserts (6) or pins arranged along a perimeter or circumference of the gasket (4).

4. Window assembly (10) according to claim 3, **characterized in that** the opening edge face (5) of the body (8) is profiled and comprises a circumferential body recess (9) for an engaging portion (12) of the gasket (4).

5. Window assembly (10) according to claim 4, **characterized in that** the body recess (9) of the body (8) is provided between parallel walls (51, 52) of the body (8) and
that the engaging portion (12) of the gasket (4) extends between the walls (51, 52) within the body recess (9), the insert(s) (6) extending within the engaging portion (12) of the gasket (4).

6. Window assembly (10) according to one of the preceding claims, **characterized in that** an equalising layer (18) or tape is arranged between the glazing edge face (11) and the flanged head (62) of the insert (6) or pin.

7. Window assembly (10) according to one of the preceding claims, **characterized in that** a lining layer (19), lining tape or washer is arranged between the flanged head (62) of the insert(s) (6) or pin(s) and the gasket bottom (15) of the gasket recess (14).

8. Window assembly (10) according to one of the preceding claims, **characterized in that** the insert (6) extends in a corresponding bore (20) of the gasket (4) provided between the gasket bottom (15) of the gasket recess (14) and the engaging portion (12) of the gasket (4).

9. Window assembly (10) according to one of the preceding claims, **characterized in that** the insert (6) comprises a tapered end portion (61) extending in a correspondingly cavity (22) or hollow space of the engaging portion (12) of the gasket (4).

10. Window assembly (10) according to one of the preceding claims, **characterized in that** the glazing (1) is an insulating glazing comprising two glass panes (2, 3).

11. Window assembly (10) according to claim 10, **characterized in that** the circumferential gasket (4) comprises an inner wall portion (23) or inner web, an outer wall portion (24) or outer web, and a middle portion (25), wherein the inner wall portion (23) extends from an inner surface (3.1) of the inner pane (3) of the insulating glazing (1) to an inner body surface (53) of the body (8), the outer wall portion (24) of the gasket (4) extends from an outer surface (2.1) of the outer pane (2) of the insulating glazing (1) to an outer body surface (53) of the body (8), and wherein the middle portion (25) extends between the gasket bottom (15) of the gasket recess (14) of the gasket (4) and the opening edge face (5) of the body (8) and between the outer and inner wall portions (24, 23) of the gasket (4).

12. Window assembly (10) according to claim 11, **characterized in that** a bore (30) or hole in a lining layer (19) and a corresponding bore (20) or hole in the middle portion (25) from the gasket bottom (15) of the gasket recess (14) to the engaging portion (12) of the gasket (4) between the walls (51, 52) of the body (8) are provided, wherein the respective insert (6) extends in the bore (30) of the lining layer (19) and in the corresponding bore (20) of the middle portion (25) of the gasket(4).

13. Window assembly (10) according to one of the preceding claims, **characterized in that** the inserts (6) or structural elements are inserted with constant or variable step along the whole perimeter of the window assembly (10) or on a specific zone of the glazing (1) and/or of the body (8) of a vehicle or building.

## Patentansprüche

1. Fensteranordnung (10) für ein Fahrzeug oder ein Gebäude, insbesondere ein Seitenfenster für einen Hochgeschwindigkeitszug, die aufweist
eine Verglasung (1) mit einer Scheibe oder mehreren Scheiben (2, 3) aus Glas, Kunststoff und/oder Keramik,
eine Fensteröffnung (7) in einem Aufbau (8) des Fahrzeugs oder Gebäudes,
eine rahmenartige Dichtung (4) zwischen der Verglasung (1) und dem Aufbau (8), die die Verglasung (1) in der Fensteröffnung (7) an dem Aufbau (8) hält,
mindestens einen Einsatz (6) oder einen Stift zur Verstärkung der Dichtung (4), wobei die Dichtung (4) eine Dichtungsaussparung (14) zur Aufnahme und Halterung einer Verglasungsrandseite (11) oder eines Randes der Verglasung (1) aufweist, wobei die Dichtungsaussparung (14) der Dichtung (4) einen umlaufenden Dichtungsboden (15) bereitstellt,
**dadurch gekennzeichnet, dass** der mindestens eine Einsatz oder Stift einen Flanschkopf (62) aufweist, der sich zwischen der Verglasungsrandseite (11) oder dem Rand und dem Dichtungsboden (15) der Dichtungsaussparung (14) erstreckt.

2. Fensteranordnung (10) nach Anspruch 1, **dadurch gekennzeichnet, dass**:
der Aufbau (8) eine Öffnungsrandseite (5) aufweist, die die im Aufbau (8) vorgesehene Fensteröffnung (7) begrenzt;
die Dichtung (4) die Verglasung (1) am Aufbau (8) hält, indem sie die Öffnungsrandseite (5) des Aufbaus (8) und die Verglasungsrandseite (11) oder den Rand der Verglasung (1) aufnimmt; und
sich der mindestens eine Einsatz (6) in der Dichtung (4) erstreckt.

3. Fensteranordnung (10) nach Anspruch 1, **gekennzeichnet durch** mehrere Einsätze (6) oder Stifte, die entlang einer Umgrenzung oder eines Umfangs der Dichtung (4) angeordnet sind.

4. Fensteranordnung (10) nach Anspruch 3, **dadurch gekennzeichnet, dass** die Öffnungsrandseite (5) des Aufbaus (8) profiliert ist und eine umlaufende Aufbauaussparung (9) für einen Eingriffsabschnitt (12) der Dichtung (4) aufweist.

5. Fensteranordnung (10) nach Anspruch 4, **dadurch gekennzeichnet, dass** die Aufbauaussparung (9) des Aufbaus (8) zwischen parallelen Wänden (51, 52) des Aufbaus (8) vorgesehen ist und
dass sich der Eingriffsabschnitt (12) der Dichtung (4) zwischen den Wänden (51, 52) innerhalb der Aufbauaussparung (9) erstreckt, wobei sich der Einsatz bzw. die Einsätze (6) innerhalb des Eingriffsabschnitts (12) der Dichtung (4) erstreckt bzw. erstrecken.

6. Fensteranordnung (10) nach einem der vorhergehenden Ansprüche, **dadurch gekennzeichnet, dass** zwischen der Verglasungsrandseite (11) und dem Flanschkopf (62) des Einsatzes (6) oder Stifts eine Ausgleichsschicht (18) oder ein Ausgleichsband angeordnet ist.

7. Fensteranordnung (10) nach einem der vorhergehenden Ansprüche, **dadurch gekennzeichnet, dass** zwischen dem Flanschkopf (62) des Einsatzes oder des Stifts bzw. der Einsätze (6) oder der Stifte und dem Dichtungsboden (15) der Dichtungsaussparung (14) eine Unterlegschicht (19), ein Unterlegband oder eine Unterlegscheibe angeordnet ist.

8. Fensteranordnung (10) nach einem der vorhergehenden Ansprüche, **dadurch gekennzeichnet, dass** sich der Einsatz (6) in einer entsprechenden Bohrung (20) der Dichtung (4) zwischen dem Dichtungsboden (15) der Dichtungsaussparung (14) und dem Eingriffsabschnitt (12) der Dichtung (4) erstreckt.

9. Fensteranordnung (10) nach einem der vorhergehenden Ansprüche, **dadurch gekennzeichnet, dass** der Einsatz (6) einen verjüngten Endabschnitt (61) aufweist, der sich in einer entsprechenden Kammer (22) oder einem entsprechenden Hohlraum des Eingriffsabschnitts (12) der Dichtung (4) erstreckt.

10. Fensteranordnung (10) nach einem der vorhergehenden Ansprüche, **dadurch gekennzeichnet, dass** die Verglasung (1) eine Isolierverglasung mit zwei Glasscheiben (2, 3) ist.

11. Fensteranordnung (10) nach Anspruch 10, **dadurch gekennzeichnet, dass** die umlaufende Dichtung (4) einen inneren Wandabschnitt (23) oder einen Innensteg, einen äußeren Wandabschnitt (24) oder einen Außensteg und einen Mittelabschnitt (25) aufweist, wobei sich der innere Wandabschnitt (23) von einer Innenseite (3.1) der Innenscheibe (3) der Isolierverglasung (1) bis zu einer inneren Aufbauseite (53) des Aufbaus (8) erstreckt, wobei sich der äußere Wandabschnitt (24) der Dichtung (4) von einer Außenseite (2.1) der Außenscheibe (2) der Isolierverglasung (1) bis zu einer äußeren Aufbauseite (53) des Aufbaus (8) erstreckt und wobei sich der Mittelabschnitt (25) zwischen dem Dichtungsboden (15) der Dichtungsaussparung (14) der Dichtung (4) und der Öffnungsrandseite (5) des Aufbaus (8) sowie zwischen den äußeren und inneren Wandabschnitten (24, 23) der Dichtung (4) erstreckt.

12. Fensteranordnung (10) nach Anspruch 11, **dadurch gekennzeichnet, dass** eine Bohrung (30) oder ein Loch in einer Unterlegschicht (19) und eine entsprechende Bohrung (20) oder ein Loch in dem Mittelabschnitt (25) vom Dichtungsboden (15) der Dichtungsaussparung (14) bis zum Eingriffsabschnitt (12) der Dichtung (4) zwischen den Wänden (51, 52) des Aufbaus (8) vorgesehen sind, wobei sich der jeweilige Einsatz (6) in der Bohrung (30) der Unterlegschicht (19) und in der entsprechenden Bohrung (20) in dem Mittelteil (25) der Dichtung (4) erstreckt.

13. Fensteranordnung (10) nach einem der vorhergehenden Ansprüche, **dadurch gekennzeichnet, dass** die Einsätze (6) oder Strukturelemente mit einem konstanten oder variablen Abstand entlang des gesamten Umfangs der Fensteranordnung (10) oder in einem bestimmten Bereich der Verglasung (1) und/oder des Aufbaus (8) eines Fahrzeugs oder eines Gebäudes eingesetzt sind.

## Revendications

1. Ensemble de fenêtre (10) pour véhicule ou bâtiment, notamment une fenêtre latérale pour train de voyageurs à grande vitesse, comprenant un vitrage (1) composé d'une ou plusieurs vitres (2, 3) en verre, plastique et/ou céramique, une ouverture de fenêtre (7) ménagée dans une construction (8) du véhicule ou du bâtiment, un joint d'étanchéité (4) de type cadre, disposé entre le vitrage (1) et la construction (8) et maintenant le vitrage (1) sur la construction (8) à l'intérieur de l'ouverture de fenêtre (7), au moins un insert (6) ou une goupille de renforcement du joint (4), le joint (4) comprenant un évidement (14) destiné à recevoir et à maintenir une face (11) du bord du vitrage ou un bord du vitrage (1), l'évidement (14) du joint (4) forme un fond du joint circonférentiel (15), **caractérisé en ce que** l'au moins un insert ou une goupille comprend une tête à flac (62) s'étendant entre la face (11) du bord du vitrage ou le bord et le fond (15) du évidement (14) du joint.

2. Ensemble de fenêtre (10) selon la revendication 1, **caractérisé en ce que**:
la construction (8) comprend une face (5) du bord d'ouverture définissant l'ouverture (7) de la fenêtre ménagée dans la construction (8);
le joint (4) maintient le vitrage (1) sur la construction (8) en recevant la face (5) du bord d'ouverture de la construction (8) et la face (11) du bord du vitrage ou le bord du vitrage (1); et le ou les inserts (6) s'étendent dans le joint (4).

3. Ensemble de fenêtre (10) selon la revendication 1, **caractérisé par** plusieurs inserts (6) ou goupilles disposés le long du périmètre ou de la circonférence du joint (4).

4. Ensemble de fenêtre (10) selon la revendication 3, **caractérisé en ce que** la face (5) du bord d'ouverture de la construction (8) est profilé et comporte un évidement (9) circonférentiel de la construction pour une partie d'engagement (12) du joint (4).

5. Ensemble de fenêtre (10) selon la revendication 4, **caractérisé en ce que** l'évidement (9) de la construction (8) est ménagé entre des parois parallèles (51, 52) de la construction (8) et que la partie d'engagement (12) du joint (4) s'étend entre les parois (51, 52) à l'intérieur de l'évidement (9) de la construction, le ou les inserts (6) s'étendant à l'intérieur de la partie d'engagement (12) du joint (4).

6. Ensemble de fenêtre (10) selon l'une des revendications précédentes, **caractérisé en ce qu'**une couche d'égalisation (18) ou un ruban est disposé entre la face (11) du bord du vitrage et la tête à flac (62) de l'insert (6) ou de la goupille.

7. Ensemble de fenêtre (10) selon l'une des revendications précédentes, **caractérisé en ce qu'**une couche de revêtement (19), une bande de revêtement ou une rondelle est disposée entre la tête à flac (62) du ou des inserts (6) ou de la ou des goupilles et le fond (15) du évidement (14) du joint.

8. Ensemble de fenêtre (10) selon l'une des revendications précédentes, **caractérisé en ce que** l'insert (6) s'étend dans un alésage correspondant (20) du joint (4) ménagé entre le fond (15) du évidement (14) du joint et la partie d'engagement (12) du joint (4).

9. Ensemble de fenêtre (10) selon l'une des revendications précédentes, **caractérisé en ce que** l'insert (6) comprend une extrémité conique (61) s'étendant dans une cavité (22) ou un espace creux correspondant de la partie d'engagement (12) du joint (4).

10. Ensemble de fenêtre (10) selon l'une des revendications précédentes, **caractérisé en ce que** le vitrage (1) est un vitrage isolant comprenant deux vitres (2, 3).

11. Ensemble de fenêtre (10) selon la revendication 10, **caractérisé en ce que** le joint circonférentiel (4) comprend une paroi intérieure (23) ou âme intérieure, une paroi extérieure (24) ou âme extérieure, et une partie médiane (25), la paroi intérieure (23) s'étend d'une surface intérieure (3.1) de la vitre intérieure (3) du vitrage isolant (1) à une surface intérieure (53) de la construction (8), la paroi extérieure (24) du joint (4) s'étend d'une surface extérieure (2.1) de la vitre extérieure (2) du vitrage isolant (1) à une surface extérieure (53) de la construction (8) et la partie médiane (25) s'étend entre le fond (15) de l'évidement (14) du joint (4) et la face (5) du bord d'ouverture de la construction (8), ainsi qu'entre les parois extérieure et intérieure (24, 23) du joint (4).

12. Ensemble de fenêtre (10) selon la revendication 11, **caractérisé en ce qu'**un alésage (30) ou trou dans une couche de revêtement (19) et un alésage (20) ou trou correspondant dans la partie médiane (25) sont prévus, depuis le fond (15) de l'évidement (14) du joint jusqu'à la partie d'engagement (12) du joint (4) entre les parois (51, 52) de la construction (8), l'insert (6) respectif s'étend dans l'alésage (30) de la couche de revêtement (19) et dans l'alésage (20) correspondant de la partie médiane (25) du joint (4).

13. Ensemble de fenêtre (10) selon l'une des revendications précédentes, **caractérisé en ce que** les inserts (6) ou éléments structurels sont insérés à pas constant ou variable sur tout le périmètre de l'ensemble de fenêtre (10) ou sur une zone spécifique du vitrage (1) et/ou de la construction (8) d'un véhicule ou d'un bâtiment.
